# EUROPEAN PATENT SPECIFICATION

(11) **EP 3 352 979 B1**
(45) Date of publication and mention of the grant of the patent: **24.03.2021**
(21) Application number: 16766609.8
(22) Date of filing: 29.07.2016
(51) Int. Cl.: B29D 30/10

(54) **PROCESS AND PLANT FOR BUILDING TYRES**
VERFAHREN UND ANLAGE ZUR HERSTELLUNG VON REIFEN
PROCÉDÉ ET INSTALLATION POUR LA CONFECTION DE PNEUMATIQUES

(30) Priority: 21.09.2015 IT UB20153757
(43) Date of publication of application: 01.08.2018
(73) Proprietor: Pirelli Tyre S.p.A., 20126 Milano (IT)
(72) Inventor: MANCINI, Gianni, 10141 Torino (IT); LO PRESTI, Gaetano, 20099 Sesto San Giovanni (IT); MARCHINI, Maurizio, 10030 Seregno (Monza Brianza) (IT)
(74) Representative: Tansini, Elio Fabrizio
(86) International application number: PCT/IB2016/054544
(87) International publication number: WO 2017/051267

(56) References cited:
- EP-A1- 0 013 437
- WO-A1-2004/041520
- WO-A1-2015/097636
- KR-A- 20130 009 974
- US-A- 3 868 203
- US-A1- 2010 288 424

## Description

The object of the present invention is a process and plant for building tyres.

More particularly, the invention relates to the building of green tyres, to be subsequently subjected to a curing cycle for obtaining the final product.

For the purposes of the present description, the term "elastomeric material" is meant to denote a composition comprising at least one elastomeric polymer and at least one reinforcement filler. Preferably, such composition further comprises additives such as, for example, a cross-linking agent and/or a plasticizer. Due to the presence of the cross-linking agent, such material can be crosslinked by heating, so as to form the final manufactured article. The terms "radial" and "axial" and the expressions "radially inner/outer" and "axially inner/outer" are used with reference to the radial direction of the forming drum used/of the tyre (i.e. to a direction perpendicular to the axis of rotation of said forming drum/tyre) and to the axial direction of the forming support used/of the tyre (i.e. to a direction parallel to the axis of rotation of said forming drum/tyre). The terms "circumferential" and "circumferentially" are instead used with reference to the annular development of said forming support/tyre.

A plane with respect to a forming drum or a tyre is said to be "radial" when it contains the axis of rotation of the forming drum or the tyre, respectively.

By "maximum chord point" it is meant any point detectable along a circumferential line that identifies the maximum tyre width. Normally, such a circumferential line, and therefore also the maximum chord point, is identified in an intermediate area of the sidewall, at about half of the radial development of the same,

By "elementary semifinished product" it is meant a continuous elongated element of elastomeric material. Preferably, such a continuous elongated element may comprise one or more textile and/or metallic cords. Preferably, such a continuous elongated element may be cut to size.

By "component" or "structural component" of a tyre it is meant any portion thereof capable of performing a specific function or a part thereof. For example, tyre components are liner, under-iiner, sidewall inserts, bead cores, filler inserts, anti-abrasive, sidewalls, carcass ply/plies, belt layer(s), tread band, tread band under-layer, under-belt inserts etc., or a part thereof.

A tyre for vehicle wheels generally comprises a carcass structure comprising at least one carcass ply having respectively opposite ends engaged with respective annular anchoring structures, integrated in the areas usually identified by the name of "beads", having an inner diameter substantially corresponding to a so-called "fitting diameter" of the tyre on a respective mounting rim. The carcass structure is associated with a belt structure which may comprise one or more belt layers, arranged in radial superposition with respect to each other and with respect to the carcass ply, having textile or metallic reinforcing cords with crossed orientation and/or substantially parallel to the circumferential development direction of the tyre (at 0 degrees). A tread band is applied in a position radially outer to the belt structure, also made of elastomeric material like other semi-finished products making up the tyre.

The belt structure associated with the tread band is hereafter referred as crown structure.

Respective sides of elastomeric material are further applied in an axially outer position on the lateral surfaces of the carcass structure, each extending from one of the lateral edges of the tread band up at the respective annular anchoring structure to the beads. In "tubeless" tyres, an airtight coating layer, usually called "liner", covers the inner surfaces of the tyre.

After the building of the green tyre, carried out by assembling respective components, a moulding and vulcanisation treatment is generally carried out in order to determine the structural stabilisation of the tyre through cross-linking of the elastomeric compositions, as well as to impart a desired tread pattern onto the same, where required, and any distinguishing or information graphic signs at the tyre sidewalls.

The carcass structure, generally in the shape of a sleeve, and the belt/crown structure are generally made separately of each other in respective work stations, to be mutually assembled at a later time.

The sidewalls may be incorporated in the structure of the tyre according to two different alternative construction schemes, called "sidewalls on tread" (SOT) and "tread on sidewalls" (TOS), respectively.

In the TOS construction scheme, the radially outer apices of the sidewalls are axially internal to the lateral edges of the tread band, and generally interposed between the carcass ply/plies and the respective lateral edges of the belt structure.

In the SOT construction scheme, the radially outer apices of the sidewalls are laterally superimposed and axially outer to the respective lateral edges of the tread band.

In WO 2004/041520, by the same Applicant, it is contemplated that a shaping drum carried by a robotic arm interacts with a transfer member bearing the belt structure taken from an auxiliary drum, to determine the coupling between the carcass structure and the belt structure. The robotic arm then carries the shaping drum in the vicinity of application devices of the tread band and/or the sidewalls comprising dispensing members arranged to deposit a continuous elongated element of elastomeric material on the mutually coupled carcass and belt structure.

Document WO 2004/041522 by the same Applicant describes a further example in which a shaping drum carried by a robotic arm is moved to interact with devices which complete the building of the green tyre after determining the application of a belt structure previously formed on an auxiliary drum.

In WO 2010/064077, by the same Applicant, a cylindrical carcass sleeve comprising at least one carcass ply having end flaps engaged to respective reinforcement annular structures is formed on a building drum. A pair of sidewalls, each extending from the corresponding bead, is applied at laterally opposite positions on the carcass ply/plies. The building drum carrying the cylindrical carcass sleeve is transferred to an assembly station, to be coupled to an outer sleeve made separately, comprising a belt structure, a tread band and optionally at least one part of the sidewalls. In the assembly station, by axial approaching of two halves forming the building drum, the carcass sleeve is toroidally shaped to determine the application against a radially inner surface of the outer sleeve, coaxially centred around the carcass sleeve.

In WO 2009/144753, by the same Applicant, in order to improve the coupling of the radially outer ends of the sidewalls, in a TOS type construction configuration it is contemplated that the tread band is associated to axially outer end portions, of the type usually referred to as mini-sidewall. The mini-sidewalls, made using a same elastomeric blend used to make the sidewalls, ensure compatibility between these two components and optimise the homogeneity and continuity in the side/tread band junction.

In WO 2015/079344, by the same Applicant, a carcass sleeve is arranged in a radially outer position with respect to a toroidal forming drum arranged in a first radially contracted operating condition. The carcass sleeve is shaped according to a toroidal configuration while the forming drum is positioned inside the carcass sleeve. During the shaping of the carcass sleeve, the forming drum is expanded radially up to a second radially expanded operating condition. At the end of the shaping, the carcass sleeve is coupled to the forming drum in the second operating condition. The forming drum, coupled to said shaped carcass sleeve, is arranged in the vicinity of at least one device for building at least one belt layer in a position radially outer to said shaped carcass sleeve.

EP 0013437 discloses an arrangement of assembling inside a tire mould a segmented tire mould core composed by core segments. The Applicant has perceived that, during the forming of the sidewalls directly on the lateral walls of the shaped carcass sleeve (as shown for example in WO 2004/041522), by effect of the inflating pressure alone, which is necessarily moderate to not compromise the structural integrity of the green tire, it may be difficult to deposit the elastomeric components with the desired accuracy due to the structural yielding of the carcass sleeve itself, particularly in the lateral areas where the structural strength of the tyre is entrusted to the carcass ply or plies alone.

The Applicant has also perceived that making the sidewalls during the building of the cylindrical carcass sleeve on the building drum, as described for example in WO2009/144753, binds the production process to the realization of TOS constructive schemes. The Applicant has further observed that the need to remove the carcass sleeve from the building drum (as shown for example in WO2015/079344) to implement the introduction of a forming drum, due to overcome the above drawbacks of yield during the building requires particular accuracy with consequent difficulty in carrying out a correct engagement of the tyre beads to ensure the proper execution of the shaping.

The Applicant has therefore perceived that if the introduction of the forming drum were carried out inside a tyre at a more advanced working stage, for example, already shaped, the introduction process would be simplified while the entire building process would be even more flexible, both of the above SOT and TOS constructive schemes being achievable in the same plant. More precisely, according to the present invention, the Applicant has found that if the forming drum is introduced into the carcass sleeve when this has already been shaped and coupled to the crown structure, the previous shaping and assembling operations can be advantageously carried out without it being necessary to remove the carcass sleeve from the building drum. At the same time, it becomes possible to significantly increase the operational flexibility of the production lines, in fact, according to the design requirements, the sidewalls may be partially or totally made on the shaped carcass sleeve, associated with the crown structure and arranged on the forming drum, or on the carcass sleeve supported by the building drum, before the shaping. More precisely, further quality improvements can therefore be achieved on the product, due to the possibility of making the sidewalls directly on the shaped carcass sleeve associated with the crown structure, starting from the axially outer edges of the tread band up to, if necessary, the beads or at least up to beyond the shoulder area of the tyre being built.

According to a first aspect thereof, the present invention relates to a process for building tyres according to claim 1.

According to a further aspect thereof, the invention relates to a plant for building tyres according to claim 11.

The Applicant believes that the insertion of a stiff forming drum into the shaped carcass sleeve allows greater operational flexibility in the production plants, achieving the possibility of building a variety of structurally different tyres simultaneously on the same production line.

The Applicant also believes that the invention is advantageously feasible also on modern production lines without requiring complex operations for adapting the same. In particular, for example, the same equipment usually used for building the radially inner portions of the sidewalls along the carcass building line could optionally be used for making additional inserts in the vicinity of the annular anchoring structures. Moreover, for example, equipment usually used for making the so-called "mini-sidewalls" can now be used to make the radially outer sidewall portions.

The Applicant also believes that the forming drum inserted into the shaped carcass sleeve associated with the crown structure allows the same to keep a precise shaping during further processing and/or to impose on it, if required, a sort of preforming according to a structural configuration possibly different from that which can be obtained by the shaping and coupling actions alone with the crown structure, for example more suitable for a correct execution of a subsequent moulding and vulcanisation treatment.

Finally, the Applicant believes that the insertion of the forming drum after the assembly with the crown structure is facilitated since it can be carried out without flanges or similar annular sealing elements on the beads optionally needed to carry out the shaping process. Moreover, the insertion of the forming drum in the carcass sleeve already toroidally shaped simplifies a correct coupling with the same carcass sleeve, in the absence of such mechanical interferences as may affect the structural integrity thereof.

In at least one of the above aspects, the invention comprises one or more of the following preferred features that are described hereinafter.

Preferably, provision is made for forming, on each of the axially opposite sides of the carcass sleeve supported by the forming drum, at least one radially outer portion of a respective sidewall, extended from an axially outer edge of the tread band towards one of said annular anchoring structures.

The Applicant believes that making the sidewalls or portions thereof on the carcass sleeve already coupled to the crown structure can contribute significant quality improvements in the end product. In particular, the steady resting of the carcass sleeve on the forming drum ensures optimal control of the geometrical shape of the sidewall portions made on the carcass sleeve itself, thus eliminating any potential inaccuracy resulting from the structural yield of the latter.

The Applicant also believes that the manufacture of tyres according to the SOT scheme can be simplified, which according to the Applicant lends itself to offer particular improvements in terms of structural integrity in the sidewall/tread band interface, for some specific sizes and/or when the tyre is subjected to extreme operating conditions.

In that regard, the Applicant noted that in the mutual coupling interface between each of the axial ends of the tread, even if provided with mini-sidewalls, and the corresponding radially outer end of the respective sidewall, detachments can trigger at the tyre shoulder, especially in extreme operating conditions. The Applicant therefore believes that for the purposes of a quality improvement of the product, it may be advantageous to make each sidewall in a single building operation, or at least a radially outer portion of the same, extending from the tread band approximately beyond the shoulder zone of the tyre, preferably already with the geometrical design shape of the build green tyre. Preferably, said radially outer portion extends beyond a maximum chord point of the tyre.

Preferably, a sidewall is entirely made on each of the axially opposite sidewalls of the shaped carcass sleeve, comprising said radially outer portion.

Making the entire sidewall, or a prevailing portion thereof, on the carcass sleeve already coupled to the crown structure allows making, if required, additional components at the sidewalls and/or beads during the make of the carcass sleeve, without causing significant delays in the production cycle.

Preferably, at least a first and a second green tyre are built. Preferably, during the building of the first and second green tyre, at least one of the following available options is selected:
a) forming, on each of the axially opposite sides of the carcass sleeve supported by the forming drum, at least one radially outer portion of a respective sidewall, extended from an axially outer edge of the tread band towards one of said annular anchoring structures;
b) applying to the carcass sleeve, before shaping, radially inner portions of said sidewalls, each extended from one of said annular anchoring structures.

Preferably, the selection operated for building the first tyre is different from the selection operated for the building of the second tyre.

Preferably, the following is provided:
c) associating the crown structure with axially outer portions of the tread band, made with an elastomeric composition equal to an elastomeric composition constituting the radially inner portions of the sidewalls.

Preferably, the following is provided:
d) applying to the carcass sleeve, before shaping, at least one elastomeric reinforcement element in proximity to each of said annular anchoring structures.

Preferably, at least one of the actions c) and d) is comprised among said options available for selection during the building of the first and second green tyre.

Preferably, forming the carcass sleeve comprises engaging said annular anchoring structures to the forming drum.

Preferably, forming the carcass sleeve further comprises applying at least one anti-abrasive insert against each of said annular anchoring structures.

Preferably, forming the carcass sleeve comprises applying, in proximity to each of said annular anchoring structures, at least one elastomeric reinforcement element being joined with the radially outer portion of the respective sidewall.

Preferably, the radially outer portion integrally covers an axially outer side of said elastomeric reinforcement element.

Preferably, said elastomeric reinforcement element has a modulus of elasticity greater than a modulus of elasticity of the respective radially outer portion.

In other words, structural stiffening elements may be introduced into the carcass sleeve which are integrated into the sidewalls in the vicinity of the respective beads.

Preferably, the engagement of the forming drum in the carcass sleeve causes a shaping of the carcass sleeve starting from said substantially toroidal shape.

It is thus possible to impart a desired configuration to the carcass sleeve coupled to the crown structure, such as optimised for executing a subsequent moulding and vulcanisation treatment. Preferably, the shaped carcass sleeve coupled to said crown structure is subjected to a radial containment action during the insertion of the forming drum.

It is therefore possible to carry out the engagement of the forming drum into the carcass sleeve without flanges or other engagement elements operating at the tyre beads. A significant simplification of the equipment and operations needed to insert and extract the forming drum into/from the carcass sleeve is thus achieved. Preferably, the building drum carrying the carcass sleeve is transferred to an assembly station, before executing said actions of positioning the crown structure and shaping the carcass sleeve. Preferably, the carcass sleeve is removed from the forming drum after being coupled with the crown structure.

Preferably, prior to the insertion of the forming drum into the carcass sleeve, the following actions are carried out:
removing, from the building drum, the carcass sleeve coupled to the crown structure;
transferring the carcass sleeve coupled to the crown structure from an assembly station to insertion devices of the forming drum.

Preferably, each of said radially outer portions is formed by means of winding at least one continuous elongated element made of elastomeric material, according to coils that are consecutively approached and/or at least partially superimposed.

Preferably, the winding of said at least one continuous elongated element is executed without interruptions.

Preferably, said tread band is formed by means of winding at least one continuous elongated element made of elastomeric material, according to coils that are consecutively approached and/or at least partially superimposed around said at least one belt layer.

Preferably, complementary devices are provided for forming, on each of the axially opposite sides of the carcass sleeve supported by the forming drum, at least one radially outer portion of a respective sidewall, extended from an axially outer edge of the tread band towards one of said annular anchoring structures. Preferably, at least one complementary work station also operates along the carcass building line for applying to the carcass sleeve at least radially inner portions of respective sidewalls, each extended from one of said annular anchoring structures. Preferably, selection devices are provided for selectively activating, during the building of each tyre, said complementary devices and/or said complementary work station.

Preferably, complementary devices are provided for associating the crown structure with axially outer portions of the tread band, made with an elastomeric composition equal to an elastomeric composition constituting radially inner portions of respective sidewalls.

Preferably, at least one complementary work station also operates along the carcass building line for applying to the carcass sleeve at least one elastomeric reinforcement element in the vicinity of each of said annular anchoring structures.

Preferably, a bead core loading station operates along the carcass building line for engaging said annular anchoring structures to the forming drum.

Preferably, a first work station operates along the carcass building line for applying at least one anti-abrasive insert.

Preferably, at least one complementary work station operates along the carcass building line for applying, in proximity to each of said annular anchoring structures, at least one elastomeric reinforcement element being joined with the radially outer portion of the respective sidewall.

Preferably, the forming drum is larger than the carcass sleeve toroidally shaped in the assembling station.

Preferably, said insertion devices comprise a first transfer location configured for exerting a radial containment action on the shaped carcass sleeve coupled to said crown structure.

Preferably, said first transfer location comprises grip members radially movable with respect to an annular support element. Preferably, first transfer devices are further provided for transferring the forming drum bearing the carcass sleeve from the carcass building line to the assembling station.

Preferably, second transfer devices are further provided for transferring the shaped carcass sleeve coupled to said crown structure from the building drum to the insertion devices. Preferably, said complementary devices comprise at least one spiralling unit for circumferentially winding at least one continuous elongated element made of elastomeric material on the carcass sleeve, according to coils that are consecutively approached and/or at least partially superimposed.

Further features and advantages will become more apparent from the detailed description of a preferred but non-limiting embodiment of a process and a plant for building tyres according to the present invention.

Such description will be given hereinafter with reference to the accompanying drawings, provided only for illustrative and, therefore, non-limiting purposes, in which:
- figure 1 schematically shows a top view of a plant for building tyres according to the present invention;
- figure 2 schematically shows the making of a radially outer portion of a sidewall on a carcass sleeve shaped and coupled to a crown structure;
- figure 3 shows a first embodiment example of a tyre which can be obtained according to the present invention;
- figure 4 shows a second embodiment example of a tyre which can be obtained according to the present invention.

With reference to said figures, reference numeral 1 globally indicates a plant for building tyres for vehicle wheels, designed to carry out a process according to the present invention.

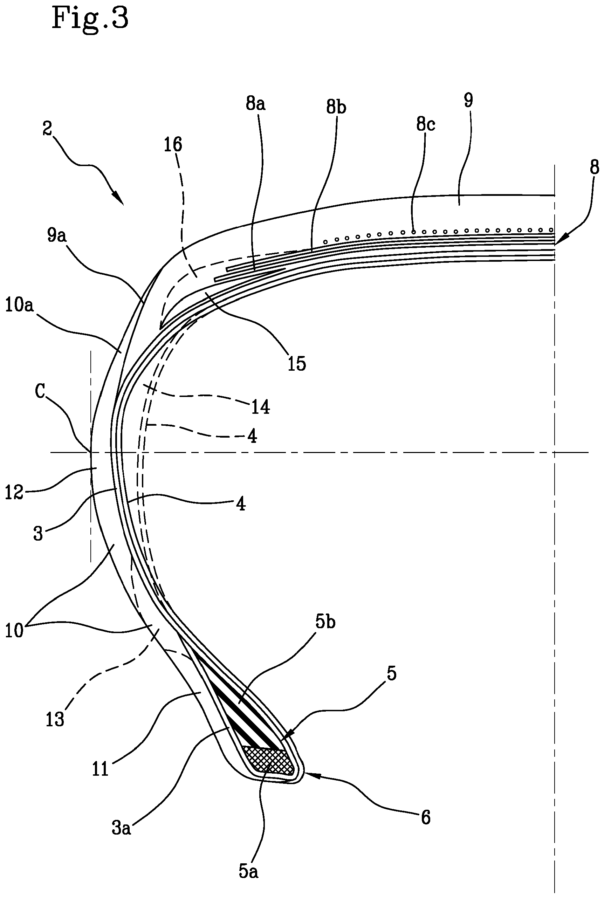

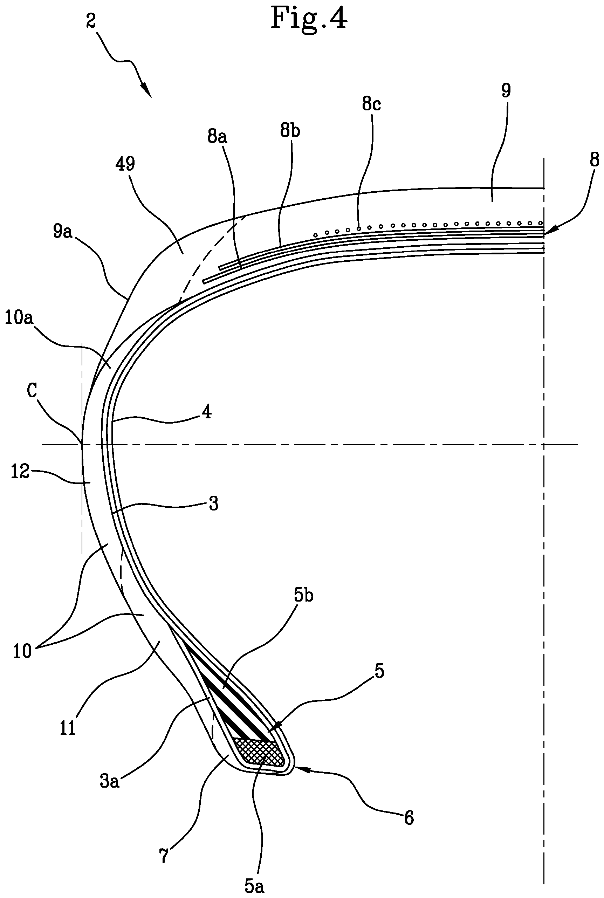

Plant 1 is designed to make tyres 2 (figures 3 and 4) essentially comprising a carcass structure having at least one carcass ply 3. A layer of waterproof elastomeric material or so-called liner 4 can be applied into the carcass ply/plies 3. Two annular anchoring structures 5, comprising each a so-called bead core 5a associated with an elastomeric filler 5b, are engaged to respective end flaps 3a of the carcass ply or plies 3. Two zones usually identified as "beads" 6, at which the engagement between tyre 2 and a respective mounting rim usually occurs, comprise said annular anchoring structures 5.

Each bead 6 can optionally be associated with an anti-abrasive insert 7 (figure 4) which externally covers the respective annular anchoring structure 5.

A belt structure 8 comprising one or more belt layers 8a, 8b, 8 c is circumferentially applied around the carcass ply/plies 3, and a tread band 9 is arranged in a position radially outer to the belt structure 8.

Two sidewalls 10, extending each from the respective bead 6 up to the proximity of a respective axially outer edge 9a of the tread band 9 are applied in laterally opposite positions on the carcass ply/plies 3.

Each of sidewalls 10 can comprise a radially inner portion 11 extending from the respective bead 6, and a radially outer portion 12 joined with one of the axially outer edges 9a of the tread band 9.

In addition to or as an alternative to the radially inner portion 11 of each sidewall 10, in proximity to each of the annular anchoring structures 5, at least one elastomeric reinforcement element 13 can be applied, being joined with the respective radially outer portion 12 and preferably having modulus of elasticity greater than a modulus of elasticity of the radially outer portion itself. Optionally, each radially outer portion 12 may integrally cover an axially outer side of the respective elastomeric reinforcement element 13.

Sidewall inserts 14 may optionally be provided, applied in an axially inner position into the carcass ply/plies 3 and extending each from the respective bead 6.

In the example in figure 3, the radially outer apices 10a of sidewalls 10 are superimposed to the axially outer edges 9a of the tread band 9, according to a SOT construction scheme.

In the example in figure 4, axially outer edges 9a of the tread band 9 are superimposed to radially outer apices 10a of the respective sidewalls 10, according to a TOS construction scheme. At least one belt under-layer (not shown in the accompanying drawings) made of elastomeric material may be applied between the carcass ply/plies 3 and the belt structure 8.

Respective annular under-belt inserts 15 made of elastomeric material and axially spaced apart from one another may be interposed between the carcass ply/plies 3 and the axially opposite edges of the belt structure 8.

Respective cover portions 16 may be optionally associated to the under-belt inserts 15 so as to make, together with the under-belt inserts 15 themselves, so-called "cushion inserts" arranged each astride each of the respective edge of the belt structure 8.

Plant 1 essentially comprises a carcass building line 17 and a crown building line 18, part of an assembling station 19.

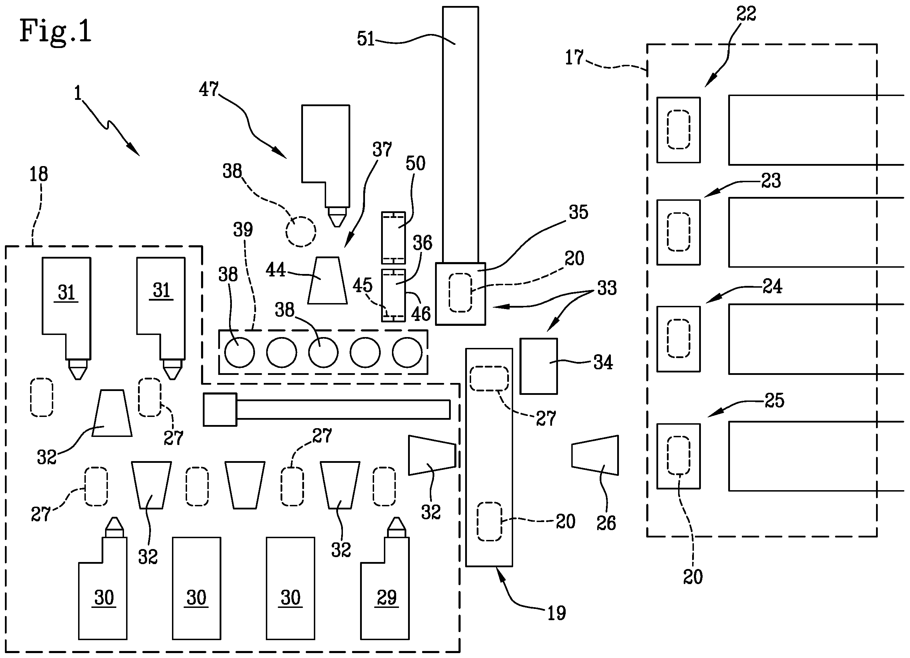

Along the carcass building line 17, one or more forming drums 20 (shown with a dashed line in figure 1) are subjected to the action of devices for forming, on each building drum, a substantially cylindrical carcass sleeve 21, comprising at least said carcass ply/plies 3, having the respective axially opposite end flaps 3a engaged to the respective annular anchoring structures 5. Such devices may for example comprise at least a first work station 22 for the application of liner 4 and/or the anti-abrasive insert 7 on the building drum, at least a second work station 23 for the application of the carcass ply/plies 3, at least one bead core loading station 24 for carrying out the application of the annular anchoring structures 5 and the turning of the end flaps 3a around the same, and optionally a complementary work station 25 for the application of the radially inner portions 11 of sidewalls 10 and/or of the elastomeric reinforcement elements 13 on the carcass sleeve 21.

Each building drum 20 is sequentially transferred between the various stations of the carcass building line 17 by first transfer devices, not shown in detail as they can be made in any convenient manner. The first transfer devices also comprise a first robotic arm 26, preferably anthropomorphic, which sequentially transfers each building drum 20, together with the carcass sleeve 21 formed thereon, from the carcass building line 17 to the assembling station 19.

Along the crown building line 18, one or more auxiliary drums 27 are subjected to the action of devices for forming, on each auxiliary drum 27, an annular crown structure 28 comprising the belt layer or layers 8a, 8b, 8c and the tread band 9.

More in particular, along the crown building line 18, at least a first work unit 29 may be provided to make, said belt under-layer and/or the under-belt inserts 15 on each auxiliary drum 27, one or more second work unit 30 to make the belt layer or layers 8a, 8b, 8c, and one or more third work unit 31 to make the tread band 9 and optionally cover portions 16 of the cushion inserts. Preferably, the tread band 9, as well as the under-layer, the under-belt inserts 15 and the other elastomeric components of the crown structure 28, are formed by spiralling, i.e. by winding at least one continuous elongated element of elastomeric material according to coils that are consecutively approached and/or at least partially superimposed around said at least one belt layer 8a, 8b, 8c.

Each auxiliary drum 27 is sequentially transferred between the various work units 29, 30, 31 of the crown building line 18 by handling devices which may for example comprise a plurality of second robotic arms 32, preferably anthropomorphic. At least one of the second robotic arms 32 may also provide to sequentially transfer each auxiliary drum 27, together with the crown structure 28 formed thereon, from the crown building line 18 to the assembling station 19.

In the assembling station 19, the crown structure 28 is picked from the respective auxiliary drum 27, for example by means of a transfer ring or other suitable devices which position it coaxially around the carcass sleeve 21, carried by the building drum 20 previously transferred to the assembling station 19 itself.

By means of shaping devices operating on the building drum 20 to cause a mutual axial approach of the respective beads 6, the carcass sleeve 21 is then shaped according to a substantially toroidal configuration and radially expanded until it comes into contact against the radially inner surfaces of the crown structure 28. A mutual coupling between the carcass sleeve 21 and the crown structure 28 is thus determined.

With the aid of second transfer devices 33, for example comprising a first mechanical handling device 34, the carcass sleeve 21 shaped and coupled to the crown structure 28 is picked from the building drum 20 and, optionally with the aid of a second mechanical handling device 35, is loaded into a first transfer location 36, interlocked with insertion devices 37 configured to engage the carcass sleeve 21 itself to at least one forming drum 38.

More particularly, a storage 39 is preferably, carrying a plurality of forming drums 38, respectively of different dimensions and/or geometrical configuration, each suitable for processing a specific type of tyre.

Each forming drum 38 can for example be made by a plurality of circumferential sectors 40 constrained to a central shaft 41 and radially movable, mutually simultaneously, on the action of return mechanisms 42 controlled by a threaded bar 43. The threaded bar 43 extends along the central shaft 41 and bears two axially opposite threads, right hand and left hand, respectively.

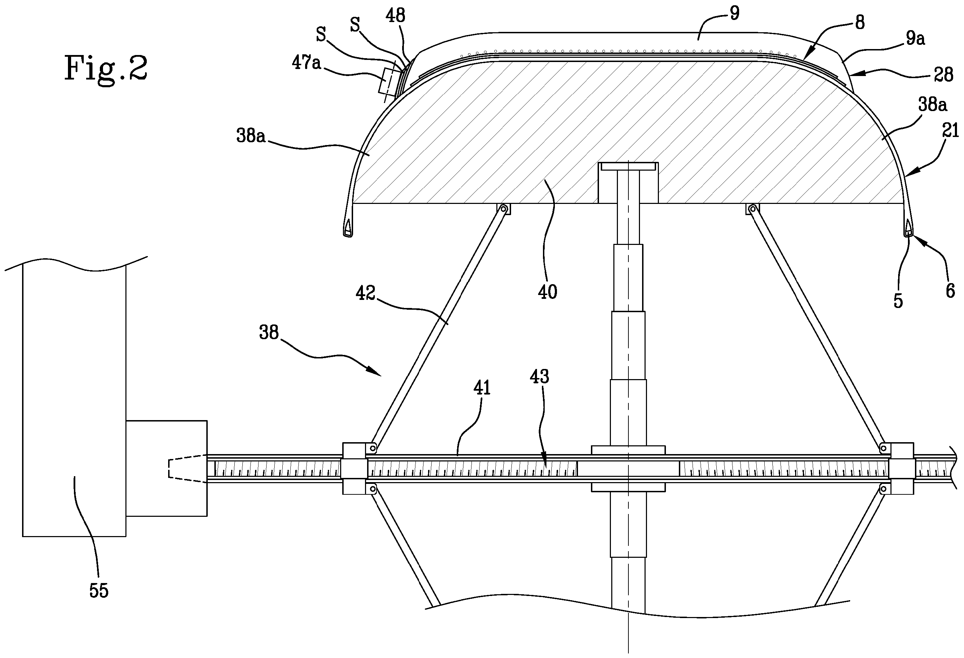

Turning the threaded bar 43 within the central shaft 41, respectively in one direction and in the other, causes the expansion and contraction of the forming drum 38 between a radially contracted condition and a radially expanded condition. In the radially contracted condition, the forming drum 38 has a diametrical dimension smaller than that of beads 6, so as to be able to be axially inserted into the carcass sleeve 21. In the radially expanded condition, as shown in figure 2, the forming drum 38 operates in contact relationship with the inner surfaces of the carcass sleeve 21, at least at axially opposite lateral portions 38a of the building drum 38 itself.

Preferably, the engagement and expansion of the forming drum 38 into the carcass sleeve 21 causes a radial tensioning and/or a shaping of the latter, starting from the toroidal shape obtained as a result of the coupling with the crown structure 28 carried out in the assembling station 19. Once coupled, the shaping of the carcass sleeve 21 can therefore be optimised for subsequent processing. To this end, it may be contemplated that the forming drum 38 in the expanded condition has dimensions slightly greater than the carcass sleeve 21 toroidally shaped in the assembling station 19.

A third robotic arm 44, preferably anthropomorphic, picks one of the forming drums 38 from storage 39, selected according to the type of tyre being processed, to insert and expand it into the carcass sleeve 21 placed in the first transfer location 36, interacting on threaded bar 43 of the drum itself.

Preferably, the first transfer location 36 is designed to operate at the radially outer surfaces of the tread band 9 for retaining the carcass sleeve 21 shaped and coupled to the crown structure 28. To this end, the first transfer location 36 may be provided with grip members 45 radially movable with respect to an annular support element 46, to exert a radial containment action on the shaped carcass sleeve 21. The insertion and the expansion of the forming drum 38 into the carcass sleeve 21 may therefore occur in the absence of flanges or other engagement elements operating at beads 6 of the tyre 2 being processed.

After carrying out the insertion and expansion of the forming drum 38 in the carcass sleeve 21, the third robotic arm 44 moves the latter away from the first transfer location 36 to subject it to the action of complementary devices 47 configured to form at least the radially outer portions 12 of sidewalls 10, on the respective opposite sides of the carcass sleeve 21 itself.

Such complimentary devices 47 may for example comprise at least one spiralling unit, for example an extruder, arranged to dispense a continuous elongated element 48 (figure 2) of raw elastomeric material which, optionally with the aid of a roller 47a or other suitable applicator devices, is deposited on the carcass sleeve 21 while the latter is driven in rotation and suitably moved by the third robotic arm 44. The continuous elongated element 48 is therefore deposited so as to form a plurality of circumferential coils "S" consecutively approached and/or at least partially superimposed, so as to define as a whole the radially outer portion 12, or if necessary the entire sidewall 10, according to a desired predefined geometric configuration.

Preferably, the radially outer portions 12 are each made in the absence of interruptions of continuity along the respective continuous elongated element 48, and extend starting from the respective axially outer edges 9a of the tread band 9 towards the annular anchoring structures 5, each extending beyond the maximum chord point "C" of the tyre 2 being processed until it joins with the respective radially inner portion 11 of the sidewall, and/or with the elastomeric reinforcement element 13 previously applied along the carcass building line 17.

If necessary, the complimentary devices 47 can also carry out the entire construction of sidewalls 10, starting from the axially outer edges 9a of the tread band 9 up to beads 6.

Alternatively, without needing any structural changes, the entire construction of sidewalls 10 can be carried out by the complementary work station 25 installed along the carcass building line 17. The complementary devices 47 are in this case designed to be used to carry out operations other than the construction of the radially outer portions 12 of sidewalls 10.

For example, the complimentary devices 47 can be used to associate the crown structure 28 with axially outer portions 49 of the tread band 9. Such axially outer portions 49, made with an elastomeric composition equal to that used to make sidewalls 10, are formed in radial superimposition to the radially outer apices 10a of sidewalls 10, according to the TOS constructive configuration.

At the end of the process at the complementary devices 47, the forming drum 38 together with the green tyre 2 built thereon are transferred to a second transfer location 50, which may be adjacent to the first transfer location 36 and structured in a manner similar to the same. On command of the third robotic arm 44, the forming drum 38 is then contracted and extracted from the built tyre 2 packed, releasing the latter in the second transfer location 50.

Tyre 2 can then be taken from the second transfer location 50, for example by means of the second transfer devices 33, which are designed to transfer it to an outlet station 51 for possible final processing.

The use and management of the forming drums 38 according to the present invention, as well as the possibility of a total or partial construction of sidewalls 10 on the carcass sleeve 21 shaped and coupled to the crown structure 28, gives an extraordinary operational flexibility to plant 1 and to the building process implemented by it, increasing the design freedom and the possibility of simultaneously building small batches of tyres 2 dimensionally and structurally different from each other.

More particularly, at least a first and a second green tyre can be simultaneously built on respective building drums 20 along the carcass building line 17, sequentially moved through the various work stations 22, 23, 24, 25.

A control module integrated in an electronic control unit which manages the operation of the plant, or other suitable selection devices not shown as they can be made in any convenient manner, can be configured to manage the operation of the single work stations 22, 23, 24, 25 of the work units 29, 30, 31, and of the complementary devices 47 on the basis of design specifications programmable each time in order to obtain structurally different tyres 2.

In particular, these selection devices are designed to selectively activate, during the packaging of each tyre, the complimentary devices 47 and/or the complementary work station 25 according to the design specifications of the tyres themselves. For example it may be contemplated that the selection devices are configured to carry out, during the building of each tyre, a selection between at least one of the following options:
a) forming the radially outer portions 12 of sidewall, respectively on each of the axially opposite sides of the carcass sleeve 21 supported by the forming drum 38;
b) applying the radially inner portions 11 of sidewall to the carcass sleeve 21, prior to the shaping;
c) associating the crown structure 28 with the axially outer portions 49 of the tread band 9;
d) applying the elastomeric reinforcement elements 13 and/or the sidewall inserts 14 to the carcass sleeve 21.

The implementation of option a) lends itself to the building of tyres having a construction scheme of the SOT type, as exemplified in figure 3. In this case, in fact, the construction of sidewalls 10, or at least of the radially outer portions 12 of the same, is carried out by the complementary devices 47 after the carcass sleeve 21 has been shaped and coupled to the crown structure 28. In this way, the radially outer apices 10a of sidewalls 10 may be made directly superimposed to the axially outer edges 9a of the tread band 9 carried by the crown structure 28. The structural continuity of sidewalls 10 is thus preserved also at the tyre shoulder zones, where high strain and abnormal stress may be concentrated, in some special sizes and/or under extreme use conditions.

On the other hand, the implementation of option c) lends itself to the building of tyres having a construction scheme of the TOS type, as exemplified in figure 4. In this case, sidewalls 10 can be entirely made on the carcass sleeve 21 by means of the complementary work station 25 provided along the carcass building line 17, and the axially outer portions 49 of the tread band 9 are formed in superimposition to the radially outer apices 10a of sidewalls 10. The use of an elastomeric material for the forming the axially outer portions 49 equal to that used for forming sidewalls 10 promotes optimal coupling between the parts.

Option b) is selectable in addition to or in replacement to option a), or in addition to option c). When selected in replacement to option a), option b) involves the entire construction of sidewalls 10 along the carcass building line 17 and is carried out in combination with option c).

Option d) is always selectable in addition to any one of options a) and c).

The selection made for building the second tyre may advantageously be different from that made for building the first tyre, even when the building of the first tyre itself has not yet been completed. It is therefore possible to build at the same time, in the same plant 1, several types of tyres structurally different from one another.

## Claims

1. Process for building tyres, comprising:
forming, on a building drum (20), a substantially cylindrical carcass sleeve (21), comprising at least one carcass ply (3) having axially opposite end flaps (3a) engaged with respective annular anchoring structures (5);
forming an annular crown structure (28) comprising at least one belt layer (8a,8b,8c) and one tread band (9) arranged in radially outer position around the belt layer (8a,8b,8c);
positioning the crown structure (28) coaxially around the carcass sleeve (21);
shaping the carcass sleeve (21) according to a substantially toroidal configuration in order to couple it to the crown structure (28), positioned coaxially around the carcass sleeve (21);
engaging, in the shaped carcass sleeve (21) coupled to the crown structure (28), a forming drum (38) having lateral portions (38a) axially opposite each other that are shaped according to an inner configuration of the carcass sleeve (21).

2. Process as claimed in claim 1, also comprising the action of forming, on each of the axially opposite sides of the carcass sleeve (21) supported by the forming drum (38), at least one radially outer portion (12) of a respective sidewall (10), extended from an axially outer edge (9a) of the tread band (9) towards one of said annular anchoring structures (5).

3. Process as claimed in claim 2, wherein on each of the axially opposite sides of the shaped carcass sleeve (21), a sidewall (10) is entirely obtained, comprising said radially outer portion (12).

4. Process as claimed in one or more of the preceding claims, wherein at least one first and one second green tyre are built, wherein during the building of the first and second green tyre, at least one of the following available options is selected:
a) forming, on each of the axially opposite sides of the carcass sleeve (21) supported by the forming drum (38), at least one radially outer portion (12) of a respective sidewall (10), extended from an axially outer edge (9a) of the tread band (9) towards one of said annular anchoring structures (5);
b) applying to the carcass sleeve (21), before shaping, radially inner portions (11) of said sidewalls (10), each extended from one of said annular anchoring structures (5), wherein the selection operated for building the first tyre is different from the selection operated for the building of the second tyre.

5. Process as claimed in claim 4, wherein provision is made for:
c) associating the crown structure (28) with axially outer portions (49) of the tread band (9), made with an elastomeric composition equal to an elastomeric composition constituting the radially inner portions (11) of the sidewalls (10).

6. Process as claimed in one or more of the claims 2 to 5, wherein provision is made for:
d) applying to the carcass sleeve (21), before shaping, at least one elastomeric reinforcement element (13) in proximity to each of said annular anchoring structures (5).

7. Process as claimed in claims 4, 5, and 6, wherein at least one of the actions c) and d) is comprised among said options available for selection during the building of the first and second green tyre.

8. Process as claimed in one or more of the preceding claims, wherein the engagement of the forming drum (38) in the carcass sleeve (21) causes a shaping of the carcass sleeve (21) starting from said substantially toroidal shape.

9. Process as claimed in one or more of the preceding claims, wherein the shaped carcass sleeve (21) coupled to said crown structure (28) is subjected to a radial containment action during the insertion of the forming drum (38).

10. Process as claimed in one or more of the preceding claims, wherein the carcass sleeve (21) is removed from the building drum (20) after having been coupled with the crown structure (28).

11. Plant for building tyres, comprising:
a carcass building line (17) comprising devices for forming, on a building drum (20), a substantially cylindrical carcass sleeve (21), comprising at least one carcass ply (3) having axially opposite end flaps (3a) engaged with respective annular anchoring structures (5);
a crown building line (18), comprising devices for forming an annular crown structure (28) comprising at least one belt layer (8a,8b,8c) and a tread band (9) arranged in radially outer position around the belt layer (8a,8b,8c);
an assembly station (19) comprising devices for positioning the crown structure (28) coaxially around the carcass sleeve (21), and shaping devices for shaping the carcass sleeve (21) according to a substantially toroidal configuration, coupling it to the crown structure (28);
**characterized in that** it comprises insertion devices for engaging, in the shaped carcass sleeve (21) coupled to the crown structure (28), a forming drum (38) having lateral portions (38a) axially opposite each other that are shaped according to an inner configuration of the carcass sleeve (21).

12. Plant as claimed in claim 11, also comprising complementary devices (47) for forming, on each of the axially opposite sides of the carcass sleeve (21) supported by the forming drum (38), at least one radially outer portion (12) of a respective sidewall (10), extended from an axially outer edge (9a) of the tread band (9) towards one of said annular anchoring structures (5).

13. Plant as claimed in claim 11 or 12, wherein at least one complementary work station (25) also operates along the carcass building line (17) for applying to the carcass sleeve (21) at least radially inner portions of respective sidewalls (10), each extended from one of said annular anchoring structures (5), the plant also comprising selection devices for selectively activating, during the building of each tyre (2), said complementary devices (47) and/or said complementary work station (25).

14. Plant as claimed in one or more of the claims 11 to 13, also comprising complementary devices (47) for associating the crown structure (28) with axially outer portions (49) of the tread band (9), obtained with an elastomeric composition equal to an elastomeric composition constituting the radially inner portions (11) of respective sidewalls (10).

15. Plant as claimed in one or more of the claims 11 to 14, wherein said insertion devices (37) comprise a first transfer location (36) configured for exerting a radial containment action on the shaped carcass sleeve (21) coupled to said crown structure (28).

## Patentansprüche

1. Verfahren zur Herstellung von Reifen, umfassend:
Bilden einer im Wesentlichen zylindrischen Karkassenhülle (21), umfassend zumindest eine Karkassenlage (3) mit axial gegenüberliegenden Endklappen (3a), die mit jeweiligen ringförmigen Verankerungsstrukturen (5) in Eingriff stehen, an einer Fertigungstrommel (20);
Bilden einer ringförmigen Zenithstruktur (28) umfassend zumindest eine Gürtellage (8a, 8b, 8c) und einen Laufflächenring (9), der in einer radial äußeren Position um die Gürtellage (8a, 8b, 8c) herum angeordnet ist;
Positionieren der Zenithstruktur (28) koaxial um die Karkassenhülle (21) herum;
Formen der Karkassenhülle (21) gemäß einer im Wesentlichen ringförmigen Konfiguration, um sie mit der Zenithstruktur (28) zu koppeln, die koaxial um die Karkassenhülle (21) herum positioniert ist;
Ineingriffbringen einer Formungstrommel (38), die einander axial gegenüberliegende seitliche Abschnitte (38a) aufweist, die gemäß einer inneren Konfiguration der Karkassenhülle (21) geformt sind, in der geformten Karkassenhülle (21), die mit der Zenithstruktur (28) gekoppelt ist.

2. Verfahren nach Anspruch 1, ebenfalls umfassend den Vorgang des Formens, an jeder der axial gegenüberliegenden Seiten der Karkassenhülle (21), die von der Formungstrommel (38) getragen wird, zumindest eines radial äußeren Abschnitts (12) einer jeweiligen Seitenwand (10), die sich von einer axial äußeren Kante (9a) des Laufflächenrings (9) zu einer der ringförmigen Verankerungsstrukturen (5) hin erstreckt.

3. Verfahren nach Anspruch 2, wobei an jeder der axial gegenüberliegenden Seiten der geformten Karkassenhülle (21) eine Seitenwand (10) vollständig erhalten wird, welche den radial äußeren Abschnitt (12) umfasst.

4. Verfahren nach einem oder mehreren der vorhergehenden Ansprüche, wobei zumindest ein erster und ein zweiter Rohreifen gefertigt werden, wobei während der Fertigung des ersten und zweiten Rohreifens zumindest eine der folgenden zur Verfügung stehenden Optionen ausgewählt wird:
a) Formen, an jeder der axial gegenüberliegenden Seiten der Karkassenhülle (21), die von der Formungstrommel (38) getragen wird, zumindest eines radial äußeren Abschnitts (12) einer jeweiligen Seitenwand (10), die sich von einer axial äußeren Kante (9a) des Laufflächenrings (9) zu einer der ringförmigen Verankerungsstrukturen (5) hin erstreckt;
b) Anbringen an der der Karkassenhülle (21), vor der Formung, von radial inneren Abschnitten (11) der Seitenwände (10), die sich jeweils von einer der ringförmigen Verankerungsstrukturen (5) weg erstrecken, wobei die Auswahl, die für die Fertigung des ersten Reifens getroffen wird, sich von der Auswahl, die für die Fertigung des zweiten Reifens getroffen wird, unterscheidet.

5. Verfahren nach Anspruch 4, wobei vorgesehen wird, dass:
c) die Zenithstruktur (28) mit axial äußeren Abschnitten (49) des Laufflächenrings (9), assoziiert wird, die aus einer Elastomerzusammensetzung gebildet werden, die gleich einer Elastomerzusammensetzung ist, welche die radial inneren Abschnitte (11) der Seitenwände (10) bildet.

6. Verfahren nach einem oder mehreren der Ansprüche 2 bis 5, wobei vorgesehen wird, dass:
d) an der Karkassenhülle (21) vor der Formung zumindest ein elastomeres Verstärkungselement (13) in unmittelbarer Nähe zu jeder der ringförmigen Verankerungsstrukturen (5) angebracht wird.

7. Verfahren nach einem der Ansprüche 4, 5 und 6, wobei zumindest einer der Vorgänge c) und d) in den Optionen enthalten ist, die zur Auswahl während der Fertigung des ersten und zweiten Rohreifens zur Verfügung stehen.

8. Verfahren nach einem oder mehreren der vorhergehenden Ansprüche, wobei das Ineingriffbringen der Formungstrommel (38) mit der Karkassenhülle (21) eine Formung der Karkassenhülle (21) ausgehend von der im Wesentlichen ringförmigen Gestalt verursacht.

9. Verfahren nach einem oder mehreren der vorhergehenden Ansprüche, wobei die geformte Karkassenhülle (21), die mit der Zenithstruktur (28) gekoppelt wird, während des Einsetzens der Formungstrommel (38) einer radialen Gegenhaltewirkung ausgesetzt wird.

10. Verfahren nach einem oder mehreren der vorhergehenden Ansprüche, wobei die Karkassenhülle (21) von der Fertigungstrommel (20) entfernt wird, nachdem sie mit der Zenithstruktur (28) gekoppelt wurde.

11. Anlage zur Fertigung von Reifen, umfassend:
eine Karkassen-Fertigungslinie (17) umfassend Einrichtungen zum Bilden einer im Wesentlichen zylindrischen Karkassenhülle (21), umfassend zumindest eine Karkassenlage (3) mit axial gegenüberliegenden Endklappen (3a), die mit jeweiligen ringförmigen Verankerungsstrukturen (5) in Eingriff stehen, an einer Fertigungstrommel (20);
eine Zenithstruktur-Fertigungslinie (18), umfassend Einrichtungen zum Bilden einer ringförmigen Zenithstruktur (28), die zumindest eine Gürtellage (8a, 8b, 8c) und einen Laufflächenring (9) umfasst, der in einer radial äußeren Position um die Gürtellage (8a, 8b, 8c) herum angeordnet ist;
eine Assemblierungssstation (19) umfassend Einrichtungen zum Positionieren der Zenithstruktur (28) koaxial um die Karkassenhülle (21) herum und Formungseinrichtungen zum Formen der Karkassenhülle (21) gemäß einer im Wesentlichen ringförmigen Konfiguration, wobei sie mit der Zenithstruktur (28) gekoppelt wird;
**dadurch gekennzeichnet, dass** sie Einsetzeinrichtungen zum Ineingriffbringen einer Formungstrommel (38), die einander axial gegenüberliegende seitliche Abschnitte (38a) aufweist, die gemäß einer inneren Konfiguration der Karkassenhülle (21) geformt sind, in der geformten Karkassenhülle (21), die mit der Zenithstruktur (28) gekoppelt ist, umfasst.

12. Anlage nach Anspruch 11, ebenfalls umfassend die ergänzenden Einrichtungen (47) zum Formen, an jeder der axial gegenüberliegenden Seiten der Karkassenhülle (21), die von der Formungstrommel (38) getragen wird, zumindest eines radial äußeren Abschnitts (12) einer jeweiligen Seitenwand (10), die sich von einer axial äußeren Kante (9a) des Laufflächenrings (9) zu einer der ringförmigen Verankerungsstrukturen (5) hin erstreckt.

13. Anlage nach Anspruch 11 oder 12, wobei zumindest eine ergänzende Arbeitsstation (25) auch entlang der Karkassen-Fertigungslinie (17) arbeitet, um an der Karkassenhülle (21) zumindest radial innere Abschnitte jeweiliger Seitenwände (10) anzubringen, die sich jeweils von einer der ringförmigen Verankerungsstrukturen (5) weg erstrecken, wobei die Anlage auch Auswahleinrichtungen umfasst, um während der Fertigung eines jeden Reifens (2) selektiv die ergänzenden Einrichtungen (47) und/oder die ergänzende Arbeitsstation (25) zu aktivieren.

14. Anlage nach einem oder mehreren der Ansprüche 11 bis 13, ebenfalls umfassend ergänzende Einrichtungen (47) zum Assoziieren der Zenithstruktur (28) mit axial äußeren Abschnitten (49) des Laufflächenrings (9), die mit einer Elastomerzusammensetzung erhalten werden, die gleich einer Elastomerzusammensetzung ist, welche die radial inneren Abschnitte (11) jeweiliger Seitenwände (10) bildet.

15. Anlage nach einem oder mehreren der Ansprüche 11 bis 14, wobei die Einsetzeinrichtungen (37) eine erste Übergabestelle (36) umfassen, die dazu ausgestaltet ist, eine radiale Gegenhaltewirkung auf die geformte Karkassenhülle (21) auszuüben, die mit der Zenithstruktur (28) gekoppelt ist.

## Revendications

1. Procédé de construction de pneus, comprenant le fait :
de former, sur un tambour de construction (20), un manchon de carcasse sensiblement cylindrique (21), comprenant au moins un pli de carcasse (3) ayant des rabats d'extrémité axialement opposés (3a) engagés avec des structures d'ancrage annulaires respectives (5) ;
de former une structure de sommet annulaire (28) comprenant au moins une couche de ceinture (8a, 8b, 8c) et une bande de roulement (9) agencée en position radialement externe autour de la couche de ceinture (8a, 8b, 8c) ;
de positionner la structure de sommet (28) de manière coaxiale autour du manchon de carcasse (21) ;
de mettre en forme le manchon de carcasse (21) conformément à une configuration sensiblement toroïdale afin de le coupler à la structure de sommet (28), positionnée de manière coaxiale autour du manchon de carcasse (21) ;
d'engager, dans le manchon de carcasse mis en forme (21) couplé à la structure de sommet (28), un tambour de formation (38) ayant des parties latérales (38a) axialement opposées les unes aux autres qui sont mises en forme conformément à une configuration interne du manchon de carcasse (21).

2. Procédé tel que revendiqué dans la revendication 1, comprenant également l'action de former, sur chacun des côtés axialement opposés du manchon de carcasse (21) supporté par le tambour de formation (38), au moins une partie radialement externe (12) d'une paroi latérale respective (10), s'étendant d'un bord axialement externe (9a) de la bande de roulement (9) vers l'une desdites structures d'ancrage annulaires (5).

3. Procédé tel que revendiqué dans la revendication 2, dans lequel, sur chacun des côtés axialement opposés du manchon de carcasse mis en forme (21), une paroi latérale (10) est entièrement obtenue, comprenant ladite partie radialement externe (12).

4. Procédé tel que revendiqué dans une ou plusieurs des revendications précédentes, dans lequel au moins des premier et deuxième pneus crus sont construits, où, lors de la construction des premier et deuxième pneus crus, au moins l'une des options disponibles suivantes est sélectionnée :
a) former, sur chacun des côtés axialement opposés du manchon de carcasse (21) supporté par le tambour de formation (38), au moins une partie radialement externe (12) d'une paroi latérale respective (10), s'étendant d'un bord axialement externe (9a) de la bande de roulement (9) vers l'une desdites structures d'ancrage annulaires (5) ;
b) appliquer, sur le manchon de carcasse (21), avant mise en forme, des parties radialement internes (11) desdites parois latérales (10), chacune s'étendant depuis l'une desdites structures d'ancrage annulaires (5), où la sélection utilisée pendant la construction du premier pneu est différente de la sélection utilisée pendant la construction du deuxième pneu.

5. Procédé tel que revendiqué dans la revendication 4, dans lequel il est prévu :
c) d'associer la structure de sommet (28) à des parties axialement externes (49) de la bande de roulement (9), réalisées avec une composition élastomère égale à une composition élastomère constituant les parties radialement internes (11) des parois latérales (10).

6. Procédé tel que revendiqué dans une ou plusieurs des revendications 2 à 5, dans lequel il est prévu :
d) d'appliquer, sur le manchon de carcasse (21), avant mise en forme, au moins un élément de renforcement élastomère (13) à proximité de chacune desdites structures d'ancrage annulaires (5).

7. Procédé tel que revendiqué dans les revendications 4, 5 et 6, dans lequel au moins l'une des actions c) et d) est comprise parmi lesdites options disponibles pour la sélection lors de la construction des premier et deuxième pneus crus.

8. Procédé tel que revendiqué dans une ou plusieurs des revendications précédentes, dans lequel l'engagement du tambour de formation (38) dans le manchon de carcasse (21) provoque une mise en forme du manchon de carcasse (21) à partir de ladite mise en forme sensiblement toroïdale.

9. Procédé tel que revendiqué dans une ou plusieurs des revendications précédentes, dans lequel le manchon de carcasse mis en forme (21) couplé à ladite structure de sommet (28) est soumis à une action de confinement radiale lors de l'insertion du tambour de formation (38).

10. Procédé tel que revendiqué dans une ou plusieurs des revendications précédentes, dans lequel le manchon de carcasse (21) est retiré du tambour de construction (20) après avoir été couplé à la structure de sommet (28).

11. Installation de construction de pneus, comprenant :
une ligne de construction de carcasse (17) comprenant des dispositifs pour former, sur un tambour de construction (20), un manchon de carcasse sensiblement cylindrique (21), comprenant au moins un pli de carcasse (3) ayant des rabats d'extrémité axialement opposés (3a) engagés avec des structures d'ancrage annulaires respectives (5) ;
une ligne de construction de sommet (18), comprenant des dispositifs pour former une structure de sommet annulaire (28) comprenant au moins une couche de ceinture (8a, 8b, 8c) et une bande de roulement (9) agencée en position radialement externe autour de la couche de ceinture (8a, 8b, 8c) ;
un poste d'assemblage (19) comprenant des dispositifs pour positionner la structure de sommet (28) de manière coaxiale autour du manchon de carcasse (21), et des dispositifs de mise en forme pour mettre en forme le manchon de carcasse (21) conformément à une configuration sensiblement toroïdale, en le couplant à la structure de sommet (28) ;
**caractérisée en ce qu'**elle comprend des dispositifs d'insertion pour engager, dans le manchon de carcasse mis en forme (21) couplé à la structure de sommet (28), un tambour de formation (38) ayant des parties latérales (38a) axialement opposées les unes aux autres qui sont mises en forme conformément à une configuration interne du manchon de carcasse (21).

12. Installation telle que revendiquée dans la revendication 11, comprenant également des dispositifs complémentaires (47) pour former, sur chacun des côtés axialement opposés du manchon de carcasse (21) supporté par le tambour de formation (38), au moins une partie radialement externe (12) d'une paroi latérale respective (10), s'étendant d'un bord axialement externe (9a) de la bande de roulement (9) vers l'une desdites structures d'ancrage annulaires (5).

13. Installation telle que revendiquée dans la revendication 11 ou 12, dans laquelle au moins un poste de travail complémentaire (25) fonctionne également le long de la ligne de construction de carcasse (17) pour appliquer, sur le manchon de carcasse (21), au moins des parties radialement internes de parois latérales respectives (10), chacune s'étendant de l'une desdites structures d'ancrage annulaires (5), l'installation comprenant également des dispositifs de sélection pour activer sélectivement, lors de la construction de chaque pneu (2), lesdits dispositifs complémentaires (47) et/ou ledit poste de travail complémentaire (25).

14. Installation telle que revendiquée dans une ou plusieurs des revendications 11 à 13, comprenant également des dispositifs complémentaires (47) pour associer la structure de sommet (28) à des parties axialement externes (49) de la bande de roulement (9), obtenues avec une composition élastomère égale à une composition élastomère constituant les parties radialement internes (11) de parois latérales respectives (10).

15. Installation telle que revendiquée dans une ou plusieurs des revendications 11 à 14, dans laquelle lesdits dispositifs d'insertion (37) comprennent un premier emplacement de transfert (36) configuré pour exercer une action de confinement radiale sur le manchon de carcasse mis en forme (21) couplé à ladite structure de sommet (28).
